# EUROPÄISCHE PATENTSCHRIFT

(11) **EP 2 926 391 B1**
(45) Veröffentlichungstag und Bekanntmachung des Hinweises auf die Patenterteilung: **01.02.2017**
(21) Anmeldenummer: 13818741.4
(22) Anmeldetag: 20.12.2013
(51) Int. Cl.: H01M 10/6556, H01M 2/02, H01M 10/39, H01M 10/64, H01M 10/6551, H01M 10/65, H01M 10/6554, H01M 10/613, H01M 10/656

(54) **WÄRMEABLEITVORRICHTUNG FÜR EINE ELEKTROCHEMISCHE SPEICHEREINRICHTUNG**
HEAT-DISSIPATING DEVICE FOR AN ELECTROCHEMICAL STORAGE DEVICE
DISSIPATEUR DE CHALEUR À AILETTES POUR UN DISPOSITIF DE STOCKAGE ÉLECTROCHIMIQUE

(30) Priorität: 08.01.2013 EP 13150506
(43) Veröffentlichungstag der Anmeldung: 07.10.2015
(73) Patentinhaber: Siemens Aktiengesellschaft, 80333 München (DE)
(72) Erfinder: KÜHNE, Michael, 90762 Fürth (DE)
(86) Internationale Anmeldenummer: PCT/EP2013/077577
(87) Internationale Veröffentlichungsnummer: WO 2014/108298

(56) Entgegenhaltungen:
- JP-A- 2002 134 165
- JP-A- 2003 229 103
- US-A- 4 189 530
- OKUYAMA R ET AL: "Relationship between the total energy efficiency of a sodium-sulfur battery system and the heat dissipation of the battery case", JOURNAL OF POWER SOURCES, ELSEVIER SA, CH, Bd. 77, Nr. 2, 1. Februar 1999 (1999-02-01), Seiten 164-169, XP004158415, ISSN: 0378-7753, DOI: 10.1016/S0378-7753(98)00190-6

## Beschreibung

Die vorliegende Erfindung betrifft ein System umfassend eine elektrochemische Speichereinrichtung, welche bei regulärem Betrieb einen mit einem Anodenmaterial befüllten Anodenraum aufweist, sowie einen mit einem Kathodenmaterial befüllten Kathodenraum, wobei der Anodenraum von dem Kathodenraum durch einen Ionen leitenden Festkörperelektrolyten getrennt ist, wobei der Anodenraum zu einer Seite wenigstens teilweise durch den Festkörperelektrolyten begrenzt ist, und zu einer anderen Seite wenigstens teilweise von einer den Festkörperelektrolyten wenigstens teilweise umgebenden Wandung, und wobei die elektrochemische Speichereinrichtung ein Kopfteil aufweist, an welchem elektrische Energie zu- bzw. abgeführt werden kann, ein dem Kopfteil gegenüber angeordnetes Fußteil, und mindestens ein die wenigstens eine Wandung umfassendes Seitenteil, welches zwischen Kopfteil und Fußteil angeordnet ist.

Weiterhin betrifft die Erfindung eine Wärmeableitvorrichtung zur Verwendung in einem solchen System, ein thermisches Modul, welches eine Mehrzahl an derartigen Systemen in elektrischer Verschaltung umfasst, sowie ein Verfahren zur Herstellung eines solchen Systems.

Elektrochemische Speichereinrichtungen gemäß der vorliegenden Erfindung sind bei Hochtemperaturen betriebene Speichereinrichtungen, die wenigstens ein Betriebstemperaturniveau von 100°C aufweisen. Insbesondere weisen derartige elektrochemische Speichereinrichtungen ein Betriebstemperaturniveau zwischen 200°C und 350°C auf. Aber auch Betriebstemperaturen von bis zu 500°C sind denkbar. Derartige elektrochemische Speichereinrichtungen sind insbesondere nach der Technologie der Natrium-Nickel-Chlorid-Zellen (NaNiCl₂-Zellen) ausgeführt bzw. sind Natrium-Schwefel-Zellen (NaS-Zellen).

Bei Betrieb derartiger elektrochemischer Speichereinrichtungen ist es erforderlich, die bei elektrischer Ladung bzw. Entladung anfallende Wärme abzuführen. Gleichzeitig ist zu gewährleisten, dass die elektrochemische Speichereinrichtung bei Betrieb auf dem Betriebstemperaturniveau gehalten werden kann, da nur bei solchen Temperaturen der Festkörperelektrolyt für den Betrieb eine geeignete Ionenleitfähigkeit aufweist und die Speichereinrichtung frei von schädlichen thermischen Spannungen bleiben kann. Das Betriebstemperaturniveau bestimmt somit mitunter auch das elektrische Verhalten der elektrochemischen Speichereinrichtung maßgeblich mit.

Zur geeigneten Einstellung eines Betriebstemperaturniveaus werden solche elektrochemischen Speichereinrichtungen für gewöhnlich durch ein Wärmemedium von außen thermisch kontaktiert, so dass Wärme geeignet zu- bzw. abgeführt werden kann. Die Wärmezu- bzw. -abfuhr kann hierbei durch ein sensorisch unterstütztes Wärmemanagementsystem übernommen werden, welches dafür sorgt, dass ein geeigneter Betriebstemperaturbereich stets eingehalten werden kann. Bei Beaufschlagung der elektrochemischen Speichereinrichtung mit relativ hohen Stromdichten bzw. bei Entnahme von Strömen höherer Stromdichten kommt es im Vergleich zum normalen Lade- bzw. Entladevorgang zu einer verstärkten Wärmebildung. Um diese Wärme bei Betrieb der elektrochemischen Speichereinrichtung effizient abführen, wird für gewöhnlich eine Stromdichtenbegrenzung vorgesehen, die, je nach Lade- bzw. Entladezustand der Zelle, auch geeignet eingestellt werden kann. In geringem Umfang ist es sogar kurzzeitig auch möglich, darüber hinaus erhöhte Stromdichten beim Laden bzw. Entladen zuzulassen, soweit die dabei erzeugte Wärme im Verhältnis zur Wärmekapazität der elektrochemischen Speichereinrichtung ausreichend gering ist.

Der Einsatz solcher elektrochemischer Speichereinrichtungen insbesondere für mobile Anwendungen fordert jedoch zunehmend eine Auslegung für erhöhte Leistungsdichten. Für stationäre Anwendungen zur Zwischenspeicherung von elektrischer Energie etwa aus einem Stromversorgungsnetzwerk sind diese Anforderungen sogar noch deutlich erhöht. Solche Anforderungen stellen mitunter auch eine hohe Herausforderung an das Wärmemanagementsystem, welches für die Kühlung der elektrochemischen Speichereinrichtung zu sorgen hat.

Um die bei einem solchen Betrieb in der elektrochemischen Speichereinrichtung frei werdende Wärme effizient abführen zu können, wurde von der Anmelderin in einer parallelen Anmeldung vorgeschlagen, die Beabstandung zwischen dem Festkörperelektrolyten und der diesen umgebenden Wandung so gering zu gestalten, dass bereits bei geringer Aufladung der elektrochemischen Speichereinrichtung dieser durch die Beabstandung bestimmte Raum mit Anodenmaterial vollständig gefüllt ist. Aufgrund dieser Füllung ist es der elektrochemischen Speichereinrichtung möglich, die freiwerdende Wärme durch direkten Wärmeabfluss über das Anodenmaterial nach außen zum Seitenteil der elektrochemischen Speichereinrichtung sehr positiv zu beeinflussen. Bspw. kann in einer solchen elektrochemischen Speichereinrichtung der das Seitenteil umfassende Zellenbecher verjüngt ausgeführt sein, wobei der keramische Festkörperelektrolyt aufgrund der geringen Beabstandung zwischen der Wandung des Bechers und seiner Oberfläche bei bereits geringem Ladezustand vollständig von Anodenmaterial benetzt ist. Durch diese Geometrie kann gleichzeitig eine gleichmäßige Temperaturverteilung um den Festkörperelektrolyten herum erreicht werden, was wiederum eine Verringerung von mechanischen Spannungen in dem Festkörperelektrolyten zur Folge hat. Dies verlängert die Lebensdauer des Festkörperelektrolyten und damit der gesamten elektrochemischen Speichereinrichtung.

Werden nun bspw. solche elektrochemischen Speichereinrichtungen bei erhöhter Leistungsdichte betrieben, kommt es auch zu einem erhöhten Anfall an Abwärme, welche nach außen typischerweise über das Seitenteil abgeführt werden muss (eine Abführung über das Kopfteil oder das Fußteil ist jedoch grundsätzlich auch denkbar). Die erhöhte Betriebstemperatur in den elektrochemischen Speichereinrichtungen beschleunigt auch die Reaktionsrate unerwünschter chemischer Reaktionen innerhalb der Speichereinrichtung. Derartige chemische Reaktionen sind bspw. in der Lage, die Kapazität der Kathode zu verringern bzw. fördern Korrosions- und Degradationserscheinungen der Elektroden und Wandungen. Insofern ist es für einen ungestörten Betrieb erforderlich, diese mitunter große Wärmemenge ausreichend schnell aus der Speichereinrichtung abzuführen, um solche etwa die Lebensdauer der Speichereinrichtung verkürzenden Einflüsse zu verringern.

Aufgabe der vorliegenden Erfindung ist es somit, eine elektrochemische Speichereinrichtung vorzuschlagen, die die aus dem Stand der Technik bekannten Nachteile vermeidet. Insbesondere soll die elektrochemische Speichereinrichtung in der Lage sein, auch bei relativ höheren Leistungsdichten betrieben zu werden, wobei die dabei frei werdende Abwärme ausreichend schnell nach außen abgeführt werden kann.

Weiterhin soll eine derartige elektrochemische Speichereinrichtung dazu geeignet sein, in einem Thermischen Modul zur Speicherung und Abgabe von elektrischer Energie eingesetzt zu werden. Ebenso ist es Aufgabe der vorliegenden Erfindung ein Verfahren zum Herstellen einer solchen elektrochemischen Speichereinrichtung vorzuschlagen.

Insbesondere soll die vorliegende Erfindung auch eine effiziente Wärmeabführung mit Hilfe von weiteren Mitteln ermöglichen, wobei die elektrochemische Speichereinrichtung, wie oben beschrieben, zur verbesserten Benetzung des Festkörperelektrolyten auch bei bereits geringem Ladezustand, konstruktiv angepasst sein kann.

Erfindungsgemäß werden diese Aufgaben durch ein System gemäß Anspruch 1 sowie eine Wärmeableitvorrichtung gemäß Anspruch 13, ein thermisches Modul gemäß Anspruch 14 sowie ein Verfahren zum Herstellen eines solchen Systems gemäß Anspruch 15 gelöst.

Insbesondere werden diese Erfindungsaufgaben gelöst durch ein System, umfassend eine elektrochemische Speichereinrichtung, welche bei regulärem Betrieb einen mit einem Anodenmaterial befüllten Anodenraum aufweist, sowie mit einem Kathodenmaterial befüllten Kathodenraum, wobei der Anodenraum von dem Kathodenraum durch einen Ionen leitenden Festkörperelektrolyten getrennt ist, wobei der Anodenraum zu einer Seite wenigstens teilweise durch den Festkörperelektrolyten begrenzt ist, und zu einer anderen Seite wenigstens teilweise von einer den Festkörperelektrolyten wenigstens teilweise umgebenden Wandung, und wobei die elektrochemische Speichereinrichtung ein Kopfteil aufweist, an welchem elektrische Energie zu- bzw. abgeführt werden kann, ein dem Kopfteil gegenüber angeordnetes Fußteil, und mindestens ein die wenigstens eine Wandung umfassendes Seitenteil, welches zwischen Kopfteil und Fußteil angeordnet ist, und wobei das System weiterhin wenigstens eine Wärmeableitvorrichtung umfasst, die dazu ausgebildet ist, über eine erste Fläche Wärme von der elektrochemischen Speichereinrichtung aufzunehmen (bzw. an diese abzugeben) und über eine zweite Fläche abzugeben (bzw. Wärme über diese aufzunehmen) und wobei die elektrochemische Speichereinrichtung einen Aufnahmeabschnitt aufweist, der dazu ausgebildet ist, mit der Wärmeableitvorrichtung in thermischen Kontakt gebracht zu werden, bzw. zu sein.

Weiter werden die der Erfindung zugrunde liegenden Aufgaben durch eine Wärmeableitvorrichtung zur Verwendung in einem solchen vorab wie auch nachfolgend beschriebenen System gelöst.

Ebenso werden die der Erfindung zugrunde liegenden Aufgaben durch ein thermisches Modul gelöst zur Speicherung und Abgabe von elektrischer Energie, umfassend eine Mehrzahl an elektrisch verschalteten Systemen wie vorab und nachfolgend beschrieben, wobei die Systeme zur Wärmeübertragung mit einem Wärmemedium umgeben sind.

Ebenso werden die der Erfindung zugrunde liegenden Aufgaben durch ein Verfahren zur Herstellung eines solchen vorab wie auch nachfolgend beschriebenen Systems gelöst, welches den folgenden Schritt umfasst:
- Thermisches Kontaktieren der elektrochemischen Speichereinrichtung mit der Wärmeableitvorrichtung an einem Aufnahmeabschnitt.

An dieser Stelle sei darauf hingewiesen, dass die Befüllung des Anodenraums mit Anodenmaterial bei regulärem Betrieb bereits vorliegt. Wie bspw. gemäß der Technologie der Natrium-Nickel-Chlorid-Zellen bekannt, kann es jedoch auch sein, dass vor einem initialen Aufladen der elektrochemischen Speichereinrichtung noch kein Anodenmaterial in dem Anodenraum vorhanden ist. Erst durch den initialen Aufladeprozess tritt das Anodenmaterial wenigstens teilweise aus dem Kathodenraum in den Anodenraum über.

Weiter ist darauf hinzuweisen, dass der thermische Kontakt zwischen elektrochemischer Speichereinrichtung und Wärmeableitvorrichtung bereits bestehen oder hergestellt sein kann. Ein thermischer Kontakt ist insbesondere als direkter Kontakt zu verstehen, bei welchem eine direkte Wärmeleitung erfolgen kann. Ebenso ist es möglich, dass ein thermischer Kontakt durch Wärmeleitmedien vermittelt wird, welche zwischen Wärmeableitvorrichtung und elektrochemischer Speichereinrichtung vorgesehen sind.

Ausführungsgemäß ist es möglich, dass eine oder auch mehrere Wärmeableitvorrichtungen pro einer elektrochemischen Speichereinrichtung vorgesehen sind.

Weiter soll darauf hingewiesen werden, dass das Kopfteil, Fußteil und/oder Seitenteil der elektrochemischen Speichereinrichtung aus separaten Werkstücken gefertigt sein können. Alternativ ist es auch möglich, dass diese Teile von lediglich einem Werkstück umfasst sind, welches bspw. geeignet geformt wurde, um die jeweiligen Teile auszubilden. Bspw. können das Seitenteil sowie das Fußteil aus einem Werkstück sein, welches bspw. becherförmig ausgebildet ist.

Erfindungsgemäß wird in dem System neben einer elektrochemischen Speichereinrichtung eine Wärmeableitvorrichtung vorgesehen, die die in der Speichereinrichtung entstehende Wärme über eine erste Fläche aufnehmen und über eine zweite Fläche abgeben kann. Hierbei weist die elektrochemische Speichereinrichtung einen zur thermischen Kontaktierung vorgesehenen Aufnahmeabschnitt auf, über welchen die Wärme an die erste Fläche der Wärmeableitvorrichtung übertragen werden kann. Der Aufnahmeabschnitt ist hierbei dazu ausgebildet, die Wärmeableitvorrichtung aufzunehmen.

Aufgrund dieser Ausbildungsform kann der elektrochemischen Speichereinrichtung besonders effizient Wärme entnommen werden. Insbesondere kann der Aufnahmeabschnitt geeignet ausgeformt sein, um die Ausbildung eines thermischen Kontakts zu fördern, so dass der thermische Widerstand zwischen elektrochemischer Speichereinrichtung und Wärmeableitvorrichtung geeignet gering ist. Somit kann im Vergleich zu einer normal ausgebildeten elektrochemischen Speichereinrichtung mitunter Wärme unter einer höheren Wärmeabführrate entnommen werden, wodurch die elektrochemische Speichereinrichtung effizienter gekühlt werden kann und so auch einen längere Lebensdauer aufweisen kann. Dies ist insbesondere von Bedeutung, da die Lebensdauer einer elektrochemischen Speichereinrichtung besonders bei erhöhter und/oder wechselnder elektrischer Belastung in erster Linie durch die Lebensdauer des Festkörperelektrolyten bestimmt wird, der durch thermische Spannungen leicht beschädigt werden kann.

Aufgrund der gezielten Wärmeableitung mittels der Wärmeableitvorrichtung kann im Vergleich zu einer elektrochemischen Speichereinrichtung ohne Wärmeableitvorrichtung eine verbessert gezielte und effizientere Wärmeabfuhr erfolgen. Dadurch kann die elektrochemische Speichereinrichtung entweder bei höheren Stromdichten betrieben werden, wobei die thermische Belastung unverändert bleibt, oder aber auch bei gleicher elektrischer Leistung unter einer Verringerung der thermischen Belastung. Beides zeigt einen positiven Effekt hinsichtlich der Verlängerung der Lebensdauer einer solchen elektrochemischen Speichereinrichtung. Zudem erlaubt die Erfindung insbesondere lokal dort gezielt Wärme abzuführen, wo sie in der elektrochemischen Speichereinrichtung verstärkt erzeugt wird. Durch eine geeignete geometrische Auswahl der Anordnung des Aufnahmeabschnitts kann so zusätzlich gezielt auf die Wärmeabfuhr Einfluss genommen werden.

Gemäß einer besonders bevorzugten Ausführungsform des erfindungsgemäßen Systems ist vorgesehen, dass die elektrochemische Speichereinrichtung als Natrium-Nickel-Chlorid-Zelle (NaNiCl₂-Zelle) ausgeführt ist, bzw. als Natrium-EisenChlorid-Zelle (NaFeCl₂-Zelle) bzw. als Mischform dieser Zellen bzw. als Natrium-Schwefel-Zelle. Die vorgenannten Formen der Zelltechnologie erfordern eine effiziente Wärmeabfuhr der Abwärme aus den elektrochemischen Speichereinrichtungen und sind damit besonders geeignet, durch die vorliegende Erfindung effizient gekühlt zu werden.

Entsprechend einer weiteren bevorzugten Ausführungsform des erfindungsgemäßen Systems ist der Aufnahmeabschnitt an der Wandung angeordnet. Die Wandung ihrerseits wird durch das Seitenteil umfasst. Herkömmliche elektrochemische Speichereinrichtungen weisen ein flächenmäßig im Vergleich zum Kopfteil bzw. Fußteil deutlich größeres Seitenteil auf, so dass diesem Bereich besonders effizient Wärme abgeführt werden kann. Zudem befindet sich die Wandung bei der elektrochemischen Speichereinrichtung verhältnismäßig nahe an dem Festkörperelektrolyten und kann somit von diesem besonders effizient Wärme abführen.

Gemäß des erfindungsgemäßen Systems ist die erste Fläche der Wärmeableitvorrichtung wenigstens teilweise passgenau bzw. flächenschlüssig mit dem Aufnahmeabschnitt der elektrochemischen Speichereinrichtung verbindbar. Insbesondere ist die gesamte erste Fläche passgenau bzw. flächenschlüssig verbindbar. Die Passgenauigkeit bzw. Flächenschlüssigkeit gewährleistet hierbei einen sehr guten thermischen Kontakt durch einen direkten mechanischen Kontakt. Ausführungsgemäß ist die Verbindung zwischen Wärmeableitvorrichtung und elektrochemischer Speichereinrichtung lösbar. Die Verbindung ist insbesondere gegen normale mechanische Beanspruchung ausreichend fest, so dass keine unerwünschte Lösung während eines herkömmlichen Betriebs erfolgen kann. Aufgrund der Passgenauigkeit bzw. Flächenschlüssigkeit ist es zudem auch möglich, von bestimmten Abschnitten der elektrochemischen Speichereinrichtung gezielt durch einen geeignet ausgeformten Aufnahmeabschnitt als Kontaktbereich Wärme abzuführen.

Entsprechend einer besonders bevorzugten Ausführungsform des erfindungsgemäßen Systems ist vorgesehen, dass der Aufnahmeabschnitt als Aussparung und/oder Ausnehmung und/oder Umformung, insbesondere der Wandung ausgebildet ist. Ein Aufnahmeabschnitt dieser Art erlaubt eine besonders günstige Verbindung zwischen Wärmeableitvorrichtung und elektrochemischer Speichereinrichtung, da beide mittels geeignet geformter Passbereiche miteinander verbunden werden können, um einen thermischen Kontakt auszubilden. Derartige Aufnahmeabschnitte erlauben zudem wiederum eine gezielte Wärmeabfuhr an thermisch besonders belasteten Bereichen der elektrochemischen Speichereinrichtung. Zudem können solche Aufnahmeabschnitte auch eine mechanisch feste Verbindung vermitteln.

Weiterhin ist es möglich, dass die Wärmeableitvorrichtung von der elektrochemischen Speichereinrichtung vereinzelbar ausgebildet ist. Vereinzelbar ist vorliegend insbesondere auch im Sinne von abnehmbar zu verstehen. Hierbei ist eine reversible Vereinzelung insbesondere dann vorgesehen, wenn beide Teile durch die Vereinzelung nicht so beschädigt werden, dass ihre Funktionsfähigkeit und eine erneute Verbindung dadurch beeinträchtigt würde. Die Vereinzelbarkeit erlaubt insbesondere bei Verschaltung derartiger Systeme zu einem thermischen Modul eine hohe Flexibilität sowie die Gewährleistung, Einzelteile bei Ermüdung bzw. bei Ausfall schnell auswechseln zu können. Dies ist insbesondere für die Wartungsfähigkeit eines solchen Systems bzw. eines solchen thermischen Moduls von großer Bedeutung.

Entsprechend einer weiteren besonders vorteilhaften Ausführungsform der Erfindung ist vorgesehen, dass die erste Fläche der Wärmeableitvorrichtung kleiner ist als die zweite Fläche. Hierbei kann die erste Fläche insbesondere vollständig in thermischem Kontakt mit der elektrochemischen Speichereinrichtung befindlich sein. Aufgrund des unterschiedlichen Größenverhältnisses zwischen erster Fläche und zweiter Fläche kann die über die erste Fläche aufgenommene Wärmemenge über eine größere zweite Fläche verteilt werden und so effizienter abgegeben werden. Da die zweite Fläche bei Betrieb der elektrochemischen Speichereinrichtung typischerweise vollständig zur Wärmeabgabe zur Verfügung steht, ergibt sich hierbei ein geeignet positives Flächenverhältnis, um auch größere Mengen an Wärme über kurze Zeitspannen effizient zu dissipieren.

Gemäß eines weiteren Aspekts des erfindungsgemäßen Systems kann vorgesehen sein, dass der Aufnahmeabschnitt so geformt ist, dass bei thermischem Kontakt von Wärmeableitvorrichtung mit der elektrochemischen Speichereinrichtung eine einheitliche Gesamtform des Systems resultiert, wobei ein erster Abschnitt der Gesamtform durch die Wärmeableitvorrichtung bestimmt ist und ein zweiter Abschnitt der Gesamtform durch die elektrochemische Speichereinrichtung bestimmt ist. Beide Abschnitte ergänzen sich also zu einer einheitlichen Gesamtform. Die Gesamtform betrifft hierbei insbesondere die nach außen zu einem möglichen Benutzer weisenden Oberflächen des ausführungsgemäßen Systems. Eine Gesamtform ist hierbei insbesondere einheitlich, wenn die Abschnitte im Wesentlichen kontinuierlich ineinander übergehen, also die Übergangsbereiche glatt sind, d.h. in mathematischem Sinn differenzierbar sind. Bei diesem Übergang sind jedoch Spalten zwischen den einzelnen Systemkomponenten nicht weiter zu beachten. Die Gesamtform kann insbesondere näherungsweise als Quader, Rotationskörper, bspw. ein Zylinder, oder auch barrenförmig mit beliebiger Grundform sein. Letztere Grundform kann bspw. ein Dreieck sein oder auch als Viereck, Sechseck oder Kreis ausgebildet sein. Weiterhin kann die Gesamtform eine Symmetrieachse aufweisen, wodurch das System ebenfalls diese Symmetrieachse aufweist. Insbesondere bei Verschaltung eines solchen ausführungsgemäßen Systems in einem thermischen Modul kann das System als einheitliche Komponente leicht verbaut werden. Auch die Systemkühlung in einem solchen thermischen Modul erfolgt vorteilhaft, da bspw. eine Strömung das System im Wesentlichen nur als Einzelkörper mit einem einheitlichen Strömungswiderstand und nicht als zwei separate Strömungswiderstände erfährt.

Zudem kann die Gesamtform derart ausgebildet sein, dass sie der Gesamtform herkömmlicher elektrochemischer Speichereinrichtungen im Wesentlichen entspricht, wodurch beide elektrochemische Speichereinrichtungen zusammen bspw. in einem thermischen Modul verbaut werden können, ohne eigene Vorkehrungen für eine Ausführungsform treffen zu müssen.

Gemäß einer weiteren vorteilhaften Ausführungsform der Erfindung ist vorgesehen, dass der Aufnahmeabschnitt näher am Fußteil als am Kopfteil angeordnet ist. Dies erweist sich insbesondere bei elektrochemischen Speichereinrichtungen als vorteilhaft, die auf der Grundlage der Technologie von Natrium-Nickel-Chlorid-Zellen bzw. Natrium-Schwefel-Zellen arbeiten. Hier zeigt sich, dass bei regulärem Betrieb insbesondere in der Nähe des Fußteils vermehrt Wärme anfällt, die zur effizienten Wärmabfuhr von dort auch vermehrt abgeführt werden muss. Insbesondere sind solche Speichereinrichtungen auch bei unterschiedlichen Ladezuständen in der Lage, am Fußteil über direkten Wärmeleitkontakt über das in dem Anodenraum befindliche Anodenmaterial die Wärme aus der elektrochemischen Speichereinrichtung nach außen hin abzuführen.

Gemäß einer weiteren vorteilhaften Ausführungsform der Erfindung ist vorgesehen, dass der Aufnahmeabschnitt höchstens 80 %, insbesondere höchstens 65 % der Gesamtoberfläche der elektrochemischen Speichereinrichtung aufweist. Insbesondere ist der Aufnahmeabschnitt mindestens 40%, insbesondere mindestens 55% der Gesamtoberfläche der elektrochemischen Speichereinrichtung. So ist es also möglich, Wärme aus der elektrochemischen Speichereinrichtung auch dann effizient abzuführen, wenn lediglich eine im Vergleich zur Gesamtoberfläche geringere Aufnahmeabschnittsfläche zur Verfügung steht.

Gemäß einer anderen Ausführungsform der Erfindung weist die Wärmeableitvorrichtung wenigstens einen geformten Bereich auf, welcher dazu ausgebildet ist, bei thermischem Kontakt zwischen elektrochemischer Speichereinrichtung und Wärmeableitvorrichtung ein an dem System vorbeiströmendes Wärmemedium fluiddynamisch in eine Vorzugsrichtung zu leiten. Der wenigstens eine geformte Bereich kann auch als Leitblech ausgeführt sein. Dieser fluiddynamische Effekt ermöglicht insbesondere eine günstige Strömungsführung eines Wärmemediums in einem Thermischen Modul, in welchem ein solches ausführungsgemäßes System verbaut ist. Insbesondere soll also das Fließverhalten des Wärmemediums günstig beeinflusst werden, so dass etwa ein das Wärmemedium bewegendes Pumpmittel weniger Arbeitsleistung zu vollführen hat, bzw. die Wärme schneller an einen anderen Ort verbracht werden kann. In anderen Worten ausgedrückt, kann durch die geeignete Strömungsleitung der Strömungswiderstand verringert werden. Das Wärmemedium in einem solchen thermischen Modul kann hierbei bspw. Luft oder auch eine Flüssigkeit wie etwa Thermoöl oder Silikonöl sein.

Entsprechend einer Weiterführung dieser Idee ist vorgesehen, dass der geformte Bereich ein Leitblech aufweist, welches insbesondere als Luftleitblech ausgebildet ist. Ein solches ermöglicht ebenfalls eine besonders effiziente Strömungsleitung.

Gemäß einer darüber hinaus gehenden Weiterführung ist auch vorgesehen, dass der geformte Bereich einen Oberflächenabschnitt aufweist, welcher ein an dem System vorbeiströmendes Wärmemedium mit einer fluiddynamischen Turbulenz beaufschlagen kann. Eine derartige Turbulenz kann mitunter eine verbesserte Wärmeableitung zur Folge haben. Insofern ist es möglich, eine höhere Wärmeübertragungsrate zwischen der zweiten Fläche der Wärmeableitvorrichtung und dem Wärmemedium zu erreichen. Insbesondere soll die Turbulenz nur lokal erzeugt werden, so dass das globale Strömungsverhalten des Wärmemediums in dem thermischen Modul nicht wesentlich nachteilig beeinflusst wird.

Weiterhin ist es denkbar, dass die Wärmeableitvorrichtung ein elektrisch isolierendes Material umfasst. Das elektrisch isolierende Material wird hierbei insbesondere von der zweiten Fläche der Wärmeableitvorrichtung umfasst. Insofern kann vermieden werden, dass bei Kontakt des Systems über die zweite Fläche, etwa in einem thermischen Modul, ein elektrischer Kurzschluss mit einem anderen System erfolgt. Insbesondere weist die Anordnung des isolierenden Materials zur Außenseite des Systems, also etwa von dem Seitenteil der elektrochemischen Speichereinrichtung weg. Alternativ ist es jedoch auch möglich, dass das isolierende Material von der ersten Fläche umfasst ist und damit bei thermischem Kontakt zwischen elektrochemischer Speichereinrichtung und Wärmeableitvorrichtung etwa zur elektrochemischen Speichereinrichtung hin gerichtet ist. Damit kann die elektrochemische Speichereinrichtung elektrisch isolierend auch mit anderen Systemen und/oder elektrochemischen Speichereinrichtungen in Kontakt gebracht werden. Eine solche ausführungsgemäße Lösung ist insbesondere dann vorteilhaft, wenn die elektrochemische Speichereinrichtung ein Seitenteil bzw. ein Kopf- und/oder Fußteil aufweist, welches elektrisch leitend ist. Insbesondere bei der Technologie bei den Natrium-Nickel-Chlorid-Zellen ist dies der Fall.

Weiterhin erweist es sich als vorteilhaft, wenn die Wärmeableitvorrichtung aus Vollmaterial ausgebildet ist. Insbesondere ist hier Metall zu erwähnen, welches als Vollmaterial eine besonders bevorzugte Wärmeleitfähigkeit aufweist. Diese Wärmeleitfähigkeit kann insbesondere verbessert im Vergleich zu der Wärmeleitfähigkeit etwa der Wandung der elektrochemischen Speichereinrichtung sein. In einer Weiterführung der Idee kann dies auch auf die Wärmeleitfähigkeit des Kopfteils, des Fußteils und/oder des Seitenteils der elektrochemischen Speichereinrichtung übertragen werden.

Entsprechend einer ersten bevorzugten Ausführungsform des erfindungsgemäßen thermischen Moduls kann vorgesehen werden, dass die Wärmeableitvorrichtung der elektrisch verschalteten Systeme gleichzeitig eine Trägerfunktion erfüllt. Die Wärmeableitvorrichtung ist somit als Träger ausgebildet. Damit reduziert sich erheblich der Material- wie auch Arbeitsaufwand für die Montage eines thermischen Moduls. Gleichzeitig können die von dem thermischen Modul erfassten Systeme sicher und betriebsgerecht gelagert werden.

Nachfolgend wird die Erfindung anhand verschiedener Figuren im Detail dargestellt. Hierbei sei darauf hingewiesen, dass die Figuren lediglich schematisch zu verstehen sind und keinerlei Einschränkung hinsichtlich der Ausführbarkeit der Erfindung zur Folge haben.

Alle in den Figuren mit gleichen Bezugszeichen versehenen Merkmale weisen eine einheitliche technische Wirkung auf.

Weiterhin soll darauf hingewiesen werden, dass die in den nachfolgenden Figuren aufgeführten Einzelmerkmale für sich alleine wie auch in beliebiger Kombination miteinander beansprucht werden, soweit eine solche Kombination unter die vorliegende Erfindungsidee fällt.

Hierbei zeigen:
- Figur 1: eine erste Ausführungsform des erfindungsgemäßen Systems in schematischer Darstellung in einer seitlichen Schnittansicht durch die Längserstreckungsachse L der elektrochemischen Speichereinrichtung;
- Figur 2: eine Querschnittsansicht durch eine Ausführungsform des erfindungsgemäßen Systems senkrecht zur Längserstreckungsachse L der elektrochemischen Speichereinrichtung;
- Figur 3: eine Querschnittsansicht durch eine Ausführungsform des erfindungsgemäßen Systems senkrecht zur Längserstreckungsachse L der elektrochemischen Speichereinrichtung;
- Figur 4: eine Querschnittsansicht durch eine Ausführungsform des erfindungsgemäßen Systems senkrecht zur Längserstreckungsachse L der elektrochemischen Speichereinrichtung;
- Figur 5: eine erste Ausführungsform des thermischen Moduls zur Speicherung und Abgabe von elektrischer Energie in schematischer seitlicher Schnittansicht.

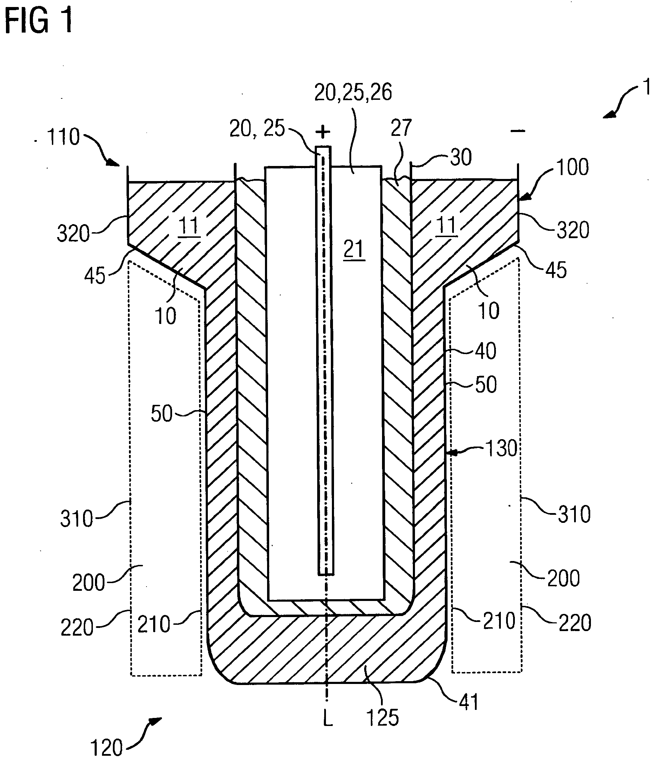

Figur 1 zeigt eine Ausführungsform des erfindungsgemäßen Systems 1 in schematischer seitlicher Schnittansicht parallel zur zentralen Längserstreckungsachse L. Das System 1 weist neben einer elektrochemischen Speichereinrichtung 100 eine Wärmeableitvorrichtung 200 auf, die in der gezeigten Schnittansicht gemäß der vorliegenden Orientierung jeweils seitlich angeordnet ist. Die elektrochemische Speichereinrichtung 100 umfasst einen mit einem Anodenmaterial 10 gefüllten Anodenraum 11, der von einem Kathodenraum 21 durch einen Festkörperelektrolyten 30 abgesetzt ist. Der Kathodenraum 21 weist eine Füllung mit Kathodenmaterial 20 auf.

Ist die elektrochemische Speichereinrichtung 100 gemäß der Technologie der Natrium-Nickel-Chlorid-Zelle ausgeführt, ist das Kathodenmaterial 20 etwa durch eine metallische Kathode 25 (bspw. aus Nickel),_durch ein Kathodensalz 26 sowie einen bei Betriebstemperatur flüssig vorliegenden Kathodenelektroiyten 27 ausgebildet. Das Anodenmaterial 10 ist bei Betriebstemperatur flüssiges Natrium. Der Festkörperelektrolyt 30 wird typischerweise als Keramik ausgebildet. Geeignete keramische Materialien sind etwa β-Al₂O₃ oder β''-Al₂O₃. Wie aus dem Stand der Technik bekannt, wird bei Aufladen der so ausgebildeten elektrochemischen Speichereinrichtung 100 Natrium in ionischer Form durch den Festkörperelektrolyten von dem Kathodenraum 21 zum Anodenraum 11 transportiert, wo diese Ionen nach Reduktion als metallisches Natrium anfallen. Bei Entladung wird dieser Transport umgekehrt, wobei sich das im Anodenraum 11 befindliche Natrium zunehmend vermindert und dadurch der Füllstandspegel des flüssigen Natriums in dem Anodenraum 11 sinkt.

Um die Wärmeableitung aus der elektrochemischen Speichereinrichtung 100 zu verbessern, kann die elektrochemische Speichereinrichtung so ausgebildet sein, dass zwischen dem Festkörperelektrolyten 30 und der von dem Seitenteil 130 der elektrochemischen Speichereinrichtung umfassten Wandung 40 lediglich ein verhältnismäßig geringer Abstand vorliegt. Ist der Anodenraum 11 auch bereits bei geringem Ladungszustand mit ausreichend Natrium in flüssiger Form gefüllt, steigt der Füllstandspegel verhältnismäßig schnell an und benetzt die zur Wandung 40 weisende Oberfläche des Festkörperelektrolyten 30 zunehmend bzw. vollständig. Zur Wärmeabfuhr steht nun das in diesem Bereich befindliche flüssige Natrium als direkter Wärmeleiter zur Verfügung, wodurch die Wärme aus der elektrochemischen Speichereinrichtung besonders effizient abgeführt werden kann.

Da diese Maßnahmen zur Wärmeabfuhr mitunter eine von der herkömmlichen Formgebung abweichenden Form der elektrochemischen Speichereinrichtung 100 erfordert, kann es bspw. in Bereichen der Oberfläche der elektrochemischen Speichereinrichtung 100 zu einer nicht ausreichend guten Wärmeabfuhr kommen, da die Wärme abgebenden Flächen verhältnismäßig klein sind, bzw. durch ein für die Wärmeabfuhr eingesetztes Wärmemedium nicht ausreichend gut erreicht werden können. Um diese Nachteile zu vermeiden, wird erfindungsgemäß eine Wärmeableitvorrichtung 200 vorgesehen, welche über einen Aufnahmeabschnitt 50 der elektrochemischen Speichereinrichtung 100 mit dieser in thermischem Kontakt steht. Die Wärmeableitvorrichtung 200 weist hierbei zum Wärmetransport vorgesehene Flächen 210 und 220 auf. Die erste Fläche 210 ist dazu ausgebildet, um über den Aufnahmeabschnitt 50 der elektrochemischen Speichereinrichtung 100 Wärme von dieser aufzunehmen, und nach Wärmeleitung durch die Wärmeableitvorrichtung 200 zur zweiten Fläche 220. hin, diese Wärme wieder über die zweite Fläche 220 abzugeben. Die Wärmeabgabe kann noch deutlich verbessert werden, wenn auf der zweiten Fläche wenigstens ein geeignet geformter Bereich vorgesehen ist, welcher die zweite Fläche noch darüber hinaus vergrößert. Insbesondere kann dieser Effekt der Wärmeabgabe verbessert werden, wenn dieser so geformte Bereich als Kühlrippe oder als Kühlrippen ausgebildet ist.

Vorliegend ist die elektrochemische Speichereinrichtung 100 mittels Umformung des Seitenteils 130 derart ausgebildet, dass zum Fußteil 120 hin gerichtet die elektrochemischen Speichereinrichtung 100 verjüngt ist. Während also das Fußteil 120 eine verjüngte Umfangfläche aufweist und insbesondere weitgehend der Kontur des Festkörperelektrolyten 30 folgt, weist das Kopfteil 110 der elektrochemischen Speichereinrichtung 100 eine verhältnismäßig gleichmäßigere und/oder größere Umfangfläche auf, welche auch den Anodenraum 11 einschließen kann.

Die Umformung 45 ist ausführungsgemäß zwischen Kopfteil 110 und Fußteil 120 angeordnet. Das Seitenteil 130 sowie das Fußteil 120 sind ausführungsgemäß von einem Becher 41 umfasst. Das Kopfteil 110 (vorliegend in noch nicht versiegelter Form gezeigt) kann dieses Seitenteil 130 teilweise mit umfassen bzw. eine nicht weiter gezeigte Abschlussplatte aufweisen.

Über das Kopfteil 110 kann elektrische Energie zu- bzw. abgeführt werden.

Ausführungsgemäß ist der Aufnahmeabschnitt 50 der elektrochemischen Speichereinrichtung 100 an der Wandung 40 angeordnet. Hierbei steht die erste Fläche 210 der Wärmeableitvorrichtung 200 im Wesentlichen passgenau bzw. flächenschlüssig mit diesem Aufnahmeabschnitt 50 in thermischem Kontakt. Eine Ableitvorrichtung 200 und die elektrochemische Speichereinrichtung 100 sind insbesondere vereinzelbar ausgebildet.

Die erste Fläche 210 der Wärmeableitvorrichtung 200 weist hierbei einen kleineren Flächeninhalt auf, als die zweite Fläche 220. Die zweite Fläche 220 kann zudem noch durch geeignete geformte Bereiche eine darüber hinaus gehende Oberflächenvergrößerung aufweisen, insbesondere in Form von einer oder mehrerer Kühlrippen, die auch gleichzeitig die Funktion einer Fluidleitfläche übernehmen kann/können. Somit vermag die Wärmeableitvorrichtung 200 die Wärme bei Wärmeleitung zur zweiten Fläche 220 hin vorteilhaft zu dissipieren und anschließend über einen größeren Flächeninhalt nach außen hin abzugeben.

Der Aufnahmeabschnitt 50 ist vorliegend so geformt, dass die elektrochemische Speichereinrichtung 100 zusammen mit der in thermischem Kontakt stehenden Wärmeableitvorrichtung 200 eine einheitliche Gesamtform des Systems 1 ausbildet. Hierbei liegt ein erster Abschnitt 310 der Wärmeableitvorrichtung 200 vor, vorliegend im Wesentlichen identisch mit der zweiten Fläche 220, welcher einen Teil der Gesamtform des Systems 1 bestimmt. Ein zweiter Abschnitt 320 dieser Gesamtform wird durch die elektrochemische Speichereinrichtung 100 bestimmt. Dieser zweite Abschnitt 320 ist ausführungsgemäß näher am Kopfteil 110 der elektrochemischen Speichereinrichtung 100 angeordnet. Ausführungsgemäß weist das System 1 eine einheitliche Gesamtform bzw. Gesamtoberfläche auf, so dass insbesondere bei Umströmen des Systems 1 mit einem Wärmemedium (vorliegend nicht gezeigt) der Strömungswiderstand verhältnismäßig gering eingestellt werden kann. Die Strömung erfährt im Wesentlichen eine einheitliche Gesamtoberfläche als Strömungswiderstand. Dies gilt insbesondere für eine Strömung, die vom Fußteil 120 zum Kopfteil 110 hin gerichtet ist.

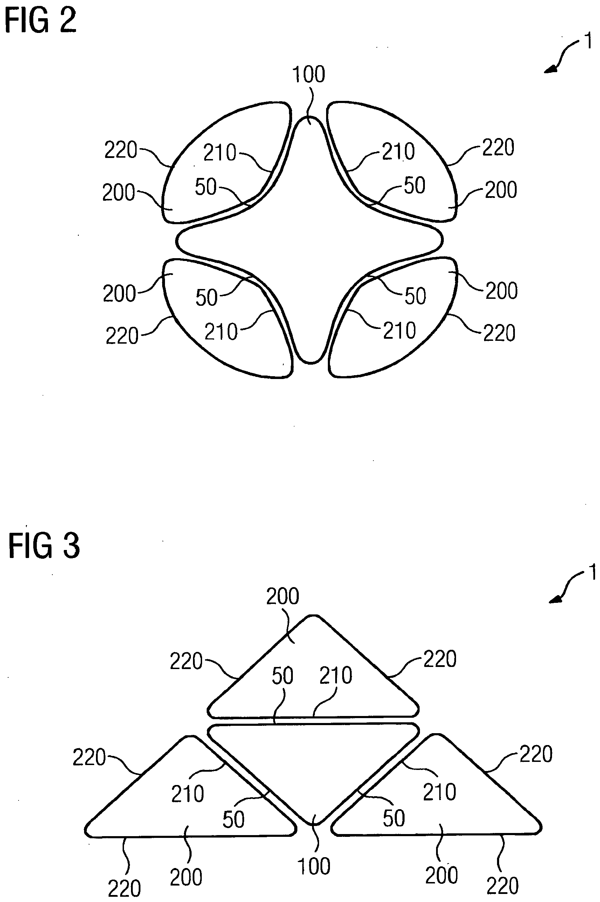

Figur 2 zeigt eine schematische Darstellung einer Querschnittansicht in einem Schnitt senkrecht zur Längserstreckungsachse L einer elektrochemischen Speichereinrichtung 100, wie sie bspw. in Figur 1 gezeigt ist. Hierbei ist der Querschnitt nahe dem Fußteil 120 vorgenommen. Die Querschnittansicht zeigt die relative Anordnung von elektrochemischer Speichereinrichtung 100 zur Wärmeableitvorrichtung 200. Die Wärmeableitvorrichtung 200 ist im Querschnitt mehrstückig (vierstückig) ausgeführt, wobei die Stücke nahe der Umformung 45 miteinander verbunden sein können. Ebenso ist es denkbar, die Wärmeableitvorrichtung 200 bereits im Querschnittsbereich einstückig auszuführen. Ebenfalls kann die Wärmeableitvorrichtung 200 auch mehrstückig ausgeführt sein, die etwa durch eine weitere, nicht gezeigte Verbindungsvorrichtung zusammen gehalten werden kann. Elektrochemische Speichereinrichtung 100 und Wärmeableitvorrichtung 200 sind über den Aufnahmeabschnitt 50 sowie die erste Fläche 210 in thermischem Kontakt. Bei Abgabe der Wärme aus dem System 1 wird ein Wärmestrom von der elektrochemischen Speichereinrichtung 100 zur zweiten Fläche 220 der Wärmeableitvorrichtung 200 geleitet und danach dissipiert. Die zweite Fläche 220 kann, wie oben bereits ausgeführt, zudem noch durch geeignete geformte Bereiche eine darüber hinaus gehende Oberflächenvergrößerung aufweisen, insbesondere in Form von einer oder mehrerer Kühlrippen, die auch gleichzeitig die Funktion einer Fluidleitfläche übernehmen kann/können.

Figur 3 zeigt eine weitere mögliche Ausführungsform einer Querschnittansicht senkrecht zu einer nicht weiter gezeigten Längserstreckungsachse L eines Systems 1 mit elektrochemischer Speichereinrichtung 100. Hierbei ist die Wärmeableitvorrichtung 200 wie in der Ausführungsform gemäß Figur 2 als mehrstückig dargestellt, insgesamt dreistückig, wobei die Einzelstücke in der geteilten Querschnittansicht eine dreieckige Grundform haben.

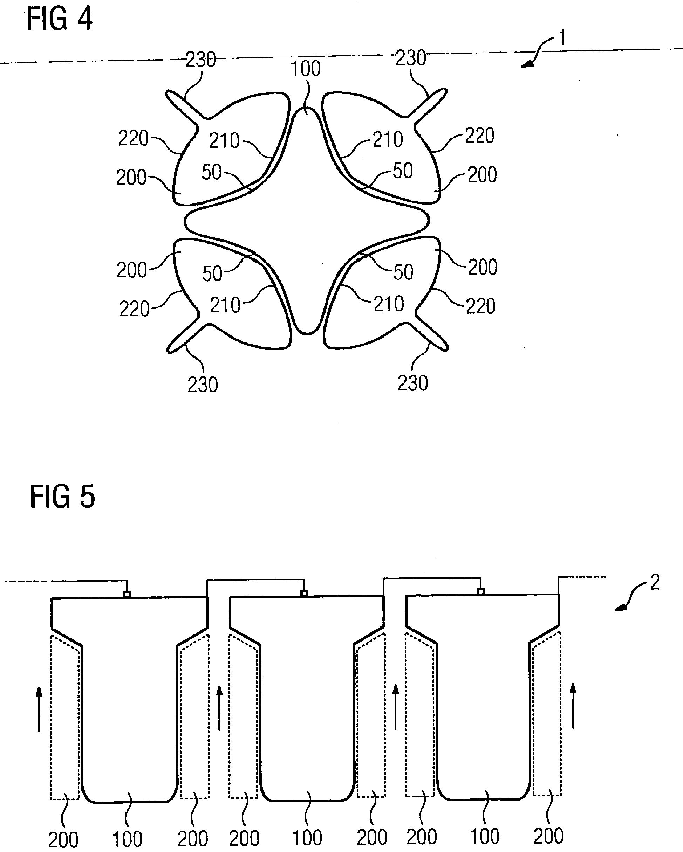

Figur 4 zeigt eine weitere Ansicht im Querschnitt zu einer nicht weiter gezeigten Längserstreckungsachse L einer Ausführungsform der elektrochemischen Speichereinrichtung 100. Hierbei sind wiederum die elektrochemische Speichereinrichtung 100 sowie die Wärmeableitvorrichtung 200 in thermischem Kontakt. Das System 1 weist eine im Wesentlichen vergleichbare Querschnittsform auf, wie auch die in Figur 2 dargestellts Ausführungsform. Die nach außen weisenden zweiten Flächen 220 der Wärmeableitvorrichtung 200 weisen jedoch mittig einen jeweils geformten Bereich 230 auf, der als Strömungsleitfläche ausgebildet ist. Der geformte Bereich 230 ist insbesondere dazu geeignet, eine Strömung (entsprechend der vorliegenden Orientierung aus der Bildebene heraus bzw. in die Bildebene hinein) vorteilhaft zu leiten. Dies verursacht eine verringerte Turbulenz in der Nähe der zweiten Fläche 220, wodurch der Fluss des daran vorbeiströmenden Wärmemediums einheitlicher und gleichmäßiger erfolgen kann.

Figur 5 zeigt eine schematische Darstellung in seitlicher Schnittansicht eines thermischen Moduls 2, welches eine Mehrzahl an elektrisch verschalteten Systemen 1 aufweist, die zur Wärmeübertragung mit einem geeigneten Wärmemedium (durch die nach oben gerichteten Pfeile veranschaulicht) umströmt werden. Hierbei sind die einzelnen Systeme 1 im Wesentlichen wie das in Figur 1 gezeigte System 1 ausgebildet. Die Wärmeableitvorrichtungen 200 können hierbei auch in geeigneter Weise als Träger ausgebildet sein, so dass die elektrochemische Speichereinrichtung 100 von diesen geeignet gehaltert bzw. getragen wird.

An dieser Stelle soll noch einmal darauf hingewiesen werden, dass die Ausmaße (Gesamtform bzw. Gesamtoberfläche) des Systems 1 im Wesentlichen denen entsprechen können, die herkömmliche elektrochemische Speichereinrichtungen aufweisen, die nicht erfindungsgemäß ausgebildet sind. Insofern kann die Packungsdichte bei Einführung eines Systems 1 in ein solches thermisches Modul 2 anstelle herkömmlicher elektrochemischer Speichereinrichtungen im Wesentlichen beibehalten werden. Dies ist also der Fall trotz Einführung der zusätzlichen Wärmeableitvorrichtungen 200.

Gemäß einer besonderen Ausführungsform des thermischen Moduls 2 kann das Wärmemedium als Luft ausgeführt sein, welches zur Kühlung der Systeme 1 in beliebiger Richtung diese umströmen kann. Ausführungsgemäß ist es auch möglich durch geeignete Konstruktion bzw. Kombination verschieden ausgeformter Wärmeableitvorrichtungen 200 in dem thermischen Modul 2 das Wärmemedium derart zu führen, so dass dieses eine zielgerichtete Strömung innerhalb des thermischen Moduls vollführt. Hierbei sind auch verschiedene Kombination mit und ohne geformten Bereichen 230 bzw. geeigneten Leitblechen denkbar.

Ebenso ist es ausführungsgemäß denkbar, durch geeignete Formgebung bzw. Kombination verschieden geformter Bereiche 230 eine vergleichbare Wirkung bei flüssigen Wärmemedien zu erreichen.

Allgemein kann das Wärmemedium gasförmig und flüssig sein. Eine Kombination von beiden ist mitunter ebenfalls denkbar. Ein vorteilhaftes gasförmiges Wärmemedium ist Luft, ein vorteilhaftes flüssiges Wärmemedium ist Thermoöl bzw. Silikonöl.

Sind die Seitenteile 130 der in dem thermischen Modul 2 elektrisch verschalteten elektrochemischen Speichereinrichtungen 200 elektrisch leitend (dies ist der Normalfall etwa bei Natrium-Nickel-Chlorid-Zellen) kann eine elektrische Isolierung verschiedener Systeme 1 dadurch erreicht werden, dass eine elektrisch isolierende Schicht etwa an den Außenkanten benachbarter Wärmeableitvorrichtung 200 bzw. an den Seitenteilen 130 vorgesehen sind, damit diese in Nachbarschaft zueinander verbaut werden können, ohne einen elektrischen Kurzschluss zwischen den einzelnen elektrochemischen Speichereinrichtungen 100 bzw. Systemen 1 befürchten zu müssen. Insofern kann die Wärmeableitvorrichtung 200 eine größere Baubreite aufweisen, so dass der erste Abschnitt 310 bzw. die zweite Fläche 220 der Wärmeableitvorrichtung 200 weiter von der Längserstreckungsachse L der elektrochemischen Speichereinrichtung 100 entfernt ist als bspw. der zweite Abschnitt 320.

Zur verbesserten elektrischen Isolierung ist es auch möglich, dass die Wärmeableitvorrichtung 200 eine elektrisch isolierende Innenschicht an der ersten Fläche 210 aufweist.

Der Fachmann vermag geeignete Kombinationen verschiedener Wärmeableitvorrichtungen 200, wie sie oben beschrieben, vorzunehmen, um für das Wärmemanagement geeignete Strömungsführungen zu erreichen.

Weitere Ausführungsformen ergeben sich aus den Unteransprüchen.

## Patentansprüche

1. System (1), umfassend eine elektrochemische Speichereinrichtung (100), welche bei regulärem Betrieb einen mit einem Anodenmaterial (10) befüllten Anodenraum (11) aufweist, sowie mit einem Kathodenmaterial (20) befüllten Kathodenraum (21), wobei der Anodenraum (11) von dem Kathodenraum (21) durch einen Ionen leitenden Festkörperelektrolyten (30) getrennt ist, wobei der Anodenraum (11) zu einer Seite wenigstens teilweise durch den Festkörperelektrolyten (30) begrenzt ist, und zu einer anderen Seite wenigstens teilweise von einer den Festkörperelektrolyten (30) wenigstens teilweise umgebenden Wandung (40), und wobei die elektrochemische Speichereinrichtung (100) ein Kopfteil (110), aufweist, an welchem elektrische Energie zu- bzw. abgeführt werden kann, ein dem Kopfteil (110) gegenüber angeordnetes Fußteil (120), und mindestens ein die wenigstens eine Wandung (40) umfassendes Seitenteil (130), welches zwischen Kopfteil (110) und Fußteil (120) angeordnet ist,
und wobei das System (1) weiterhin wenigstens eine von der elektrochemischen Speichereinrichtung (100) vereinzelbar ausgebildete Wärmeableitvorrichtung (200) umfasst, die dazu ausgebildet ist, über eine erste Fläche (210) Wärme von der elektrochemischen Speichereinrichtung (100) aufzunehmen und über eine zweite Fläche (220) abzugeben, und wobei die elektrochemische Speichereinrichtung (100) ferner einen Aufnahmeabschnitt (50) aufweist, der dazu ausgebildet ist, mit der Wärmeableitvorrichtung (200) in thermischen Kontakt gebracht zu werden
**dadurch gekennzeichnet, dass**
die erste Fläche (210) der Wärmeableitvorrichtung (200) wenigstens teilweise passgenau mit dem Aufnahmeabschnitt (50) der elektrochemischen Speichereinrichtung (100) verbindbar ist.

2. System gemäß Anspruch 1,
**dadurch gekennzeichnet, dass**
die elektrochemische Speichereinrichtung (100) als NaNiCl₂-Zelle ausgeführt ist, bzw. als NaFeCl₂-Zelle, bzw. als Mischform dieser Zellen.

3. System gemäß einem der vorhergehenden Ansprüche,
**dadurch gekennzeichnet, dass**
der Aufnahmeabschnitt (50) an der Wandung (40) angeordnet ist.

4. System gemäß einem der vorhergehenden Ansprüche,
**dadurch gekennzeichnet, dass**
der Aufnahmeabschnitt (50) als Aussparung und/oder Ausnehmung und/oder Umformung, insbesondere der Wandung (40) ausgebildet ist.

5. System gemäß einem der vorhergehenden Ansprüche,
**dadurch gekennzeichnet, dass**
die erste Fläche (210) der Wärmeableitvorrichtung (200) kleiner ist als die zweite Fläche (220).

6. System gemäß einem der vorhergehenden Ansprüche,
**dadurch gekennzeichnet, dass**
der Aufnahmeabschnitt (50) so geformt ist, dass bei thermischem Kontakt von Wärmeableitvorrichtung (200) mit der elektrochemischen Speichereinrichtung (100) eine einheitliche Gesamtform des Systems resultiert, wobei ein erster Abschnitt (310) der Gesamtform durch die Wärmeableitvorrichtung (200) bestimmt ist und ein zweiter Abschnitt (320) der Gesamtform durch die elektrochemische Speichereinrichtung (100) bestimmt ist.

7. System gemäß einem der vorhergehenden Ansprüche,
**dadurch gekennzeichnet, dass**
der Aufnahmeabschnitt (50) näher am Fußteil (120) als am Kopfteil (110) angeordnet ist.

8. System gemäß einem der vorhergehenden Ansprüche,
**dadurch gekennzeichnet, dass**
die Wärmeableitvorrichtung (200) wenigstens einen geformten Bereich (230) aufweist, welcher dazu ausgebildet ist, bei thermischem Kontakt zwischen elektrochemischer Speichereinrichtung (100) und Wärmeableitvorrichtung (200) ein an dem System (1) vorbei strömendes Wärmemedium fluiddynamisch in eine Vorzugsrichtung zu leiten.

9. System gemäß Anspruch 8,
**dadurch gekennzeichnet, dass**
der geformte Bereich (230) einen Oberflächenabschnitt aufweist, welcher ein an dem System (1) vorbei strömendes Wärmemedium mit einer fluiddynamischen Turbulenz beaufschlagen kann.

10. System gemäß einem der vorhergehenden Ansprüche,
**dadurch gekennzeichnet, dass**
die Wärmeableitvorrichtung (200) ein elektrisch isolierendes Material umfasst.

11. Thermisches Modul (2) zur Speicherung und Abgabe von elektrischer Energie, umfassend eine Mehrzahl an elektrisch verschalteten Systemen (1) gemäß einem der vorhergehenden Ansprüche 1 bis 10, wobei die Systeme (1) zur Wärmeübertragung mit einem Wärmemedium umgeben sind.

12. Verfahren zur Herstellung eines Systems (1) gemäß einem der vorhergehenden Ansprüche 1 bis 10, umfassend den Schritt:
- Thermisches Kontaktieren der elektrochemischen Speichereinrichtung (100) mit der Wärmeableitvorrichtung (200) an einem Aufnahmeabschnitt (50).

## Claims

1. System (1) comprising an electrochemical storage device (100) which, when operating normally, comprises an anode compartment (11) filled with an anode material (10) and a cathode compartment (21) filled with a cathode material (20), wherein the anode compartment (11) is separated from the cathode compartment (21) by an ion conducting solid electrolyte (30), wherein the anode compartment (11) is defined on one side at least in part by the solid electrolyte (30), and on another side at least in part by a wall (40) at least partially surrounding the solid electrolyte (30), and wherein the electrochemical storage device (100) comprises a top part (110), at which electrical energy may be supplied or conducted away, a bottom part (120) arranged opposite the top part (110), and at least one side part (130) comprising the at least one wall (40) and arranged between top part (110) and bottom part (120),
and wherein the system (1) further comprises at least one heat dissipating device (200), which is configured to be separable from the electrochemical storage device (100) and to receive heat from the electrochemical storage device (100) via a first surface (210) and release it via a second surface (220) and wherein the electrochemical storage device (100) further comprises a receiving portion (50), which is configured to be brought into thermal contact with the heat dissipating device (200),
the first surface (210) of the heat dissipating device (200) may be connected at least in part with an exact fit with the receiving portion (50) of the electrochemical storage device (100).

2. System according to Claim 1,
**characterized in that**
the electrochemical storage device (100) is embodied as an NaNiCl₂ cell, or as an NaFeCl₂ cell or as a mixture of these cells.

3. System according to one of the preceding claims,
**characterized in that**
the receiving portion (50) is arranged at the wall (40).

4. System according to one of the preceding claims,
**characterized in that**
the receiving portion (50) takes the form of a depression and/or recess and/or shaping, in particular of the wall (40).

5. System according to one of the preceding claims,
**characterized in that**
the first surface (210) of the heat dissipating device (200) is smaller than the second surface (220).

6. System according to one of the preceding claims,
**characterized in that**
the receiving portion (50) is shaped such that on thermal contact of the heat dissipating device (200) with the electrochemical storage device (100) an integrated overall shape of the system results, wherein a first portion (310) of the overall shape is determined by the heat dissipating device (200) and a second portion (320) of the overall shape is determined by the electrochemical storage device (100).

7. System according to one of the preceding claims,
**characterized in that**
the receiving portion (50) is arranged closer to the bottom part (120) than to the top part (110).

8. System according to one of the preceding claims,
**characterized in that**
the heat dissipating device (200) comprises at least one shaped region (230), which is configured to guide a heat transfer medium flowing past the system (1) fluid-dynamically in a preferential direction on thermal contact between electrochemical storage device (100) and heat dissipating device (200).

9. System according to Claim 8,
**characterized in that**
the shaped region (230) comprises a surface portion on which a heat transfer medium flowing past the system (1) may act with fluid-dynamic turbulence.

10. System according to one of the preceding claims,
**characterized in that**
the heat dissipating device (200) comprises an electrically insulating material.

11. Thermal module (2) for storing and releasing electrical energy, comprising multiple electrically interconnected systems (1) according to one of preceding Claims 1 to 10, wherein the systems (1) are surrounded by a heat transfer medium for heat transfer purposes.

12. Method for producing a system (1) according to one of preceding Claims 1 to 10, comprising the step of:
- bringing the electrochemical storage device (100) into thermal contact with the heat dissipating device (200) at a receiving portion (50).

## Revendications

1. Système (1) comprenant un dispositif (100) électrochimique de stockage qui a en fonctionnement régulier un espace (11) anodique empli d'une matière (10) d'anode ainsi qu'un espace (21) cathodique empli d'une matière (20) de cathode, l'espace (11) anodique étant séparé de l'espace (21) cathodique par un électrolyte (30) solide, conducteur d'ions, l'espace (11) anodique étant délimité d'un côté, au moins en partie, par l'électrolyte (30) solide et d'un autre côté, au moins en partie, par une paroi (40) entourant au moins en partie l'électrolyte (30) solide, le dispositif (100) électrochimique de stockage ayant une partie (110) de tête où de l'énergie électrique peut être apportée et d'où respectivement il peut en être retiré, une partie (120) de pied disposée en face de la partie (110) de tête et au moins une partie (130) latérale comprenant là au moins une paroi (40) et disposée entre la partie (110) de tête et la partie (120) de pied,
et dans lequel le système (1) comprend en outre au moins un dispositif (200) de dissipation de chaleur, constitué de manière à pouvoir être individualisé du dispositif (100) électrochimique de stockage et constitué pour absorber par une première surface (210) de la chaleur du dispositif (100) électrochimique de stockage et à en céder par une deuxième surface (220) et dans lequel le dispositif (100) électrochimique de stockage a en outre une partie (50) de réception constituée pour être mise en contact thermique avec le dispositif (200) de dissipation de chaleur,
**caractérisé en ce que** la première surface (210) du dispositif (200) de dissipation de chaleur peut au moins en partie avec exactitude être reliée à la partie (50) de réception du dispositif (100) électrochimique de stockage.

2. Système (1) suivant revendication (1),**caractérisé en ce que** le dispositif (100) électrochimique de stockage est réalisé en piles NaNiCl₂ ou en piles NaFeCl₂ ou en une forme mixte de ces piles.

3. Système (1) suivant l'une des revendications précédentes, **caractérisé en ce que** la partie (50) de réception est disposée sur la paroi (40).

4. Système (1) suivant l'une des revendications précédentes, **caractérisé en ce que** la partie (50) de réception est constituée sous la forme d'un évidement et/ou d'une cavité et/ou d'une déformation, notamment de la paroi (40).

5. Système (1) suivant l'une des revendications précédentes, **caractérisé en ce que** la première surface (210) du dispositif (200) de dissipation de chaleur est plus petite que la deuxième surface (220).

6. Système (1) suivant l'une des revendications précédentes, **caractérisé en ce que** la partie (50) de réception est conformée de manière à ce que, lors d'un contact thermique du dispositif (200) de dissipation de chaleur avec le dispositif (100) électrochimique de stockage, il s'ensuive une forme globale unitaire du système, une première partie (310) de la forme globale étant définie par le dispositif (200) de dissipation de chaleur et une deuxième partie (320) de la forme globale étant définie par le dispositif (100) électrochimique de stockage.

7. Système (1) suivant l'une des revendications précédentes, **caractérisé en ce que** la partie (50) de réception est disposée plus près de la partie (120) de pied que de la partie (110) de tête.

8. Système (1) suivant l'une des revendications précédentes, **caractérisé en ce que** le dispositif (200) de dissipation de chaleur a au moins une partie (230) conformée qui est constituée pour, s'il y a un contact thermique entre le dispositif (100) électrochimique de stockage et le dispositif (200) de dissipation de chaleur, diriger en dynamique de fluide dans une direction préférée un milieu de transfert de chaleur passant à côté du système (1).

9. Système (1) suivant la revendication 8, **caractérisé en ce que** la région (230) conformée a une partie de surface, qui peut donner une turbulence en dynamique des fluides à un milieu de transport de chaleur passant à côté du système (1).

10. Système (1) suivant l'une des revendications précédentes, **caractérisé en ce que** le dispositif (200) de dissipation de chaleur comprend un matériau isolant électriquement.

11. Module (2) thermique de stockage et de cession d'énergie électrique comprenant une multiplicité de systèmes (1) connectée électriquement suivant l'une des revendications précédentes 1 à 10, les systèmes (1)étant entourés pour le transfert de chaleur d'un milieu de transfert de chaleur.

12. Procédé de production d'un Système (1) suivant l'une des revendications précédentes 1 à 10, comprenant le stade :
- Mise en contact thermique du dispositif (100) électrochimique de stockage avec le dispositif (200) de dissipation de chaleur à une partie (50) d'absorption.
